# EUROPEAN PATENT SPECIFICATION

(11) **EP 3 294 472 B1**
(45) Date of publication and mention of the grant of the patent: **19.07.2023**
(21) Application number: 16730488.0
(22) Date of filing: 13.05.2016
(51) Int. Cl.: B21D 22/22, B21D 22/24, B21D 51/22, B21D 19/12

(54) **METHOD AND APPARATUS FOR THE PRODUCTION OF METAL BAKEWARE**
VERFAHREN UND VORRICHTUNG ZUR HERSTELLUNG VON EINER METALLBACKFORM
PROCÉDÉ ET APPAREIL DE PRODUCTION DE MOULE À PÂTISSERIE MÉTALLIQUE

(30) Priority: 15.05.2015 IT RM20150211
(43) Date of publication of application: 21.03.2018
(73) Proprietor: Contital S.r.l., 80141 Napoli (IT)
(72) Inventor: MOSCHINI, Luca, 81052 Pignataro Maggiore (CE) (IT)
(74) Representative: Papa, Elisabetta
(86) International application number: PCT/IB2016/052771
(87) International publication number: WO 2016/185341

(56) References cited:
- EP-A1- 2 554 080
- EP-A2- 1 080 806
- US-A- 3 064 112
- US-A1- 2005 205 646

## Description

### Technical field of the invention

The present invention is referred to a method for the production of metallic cake pan, in particular of circular shape, of re-usable type and to a relative apparatus for production thereof.

### Background

The metallic cake pan of circular shape are consumer goods, because they are employed for cooking cakes in the oven (especially "pastiere"), pies and many other types of food. Among these, the cake pans of reusable type - i.e. non-disposable - generally have a thickness greater than 250 µm.

At the state of the art, the realization of this type of cake pans is based on a spin-forming process called "metal spinning." This process involves the progressive deformation of a circular metal plate, which is worked gradually until it takes the shape of a spindle.

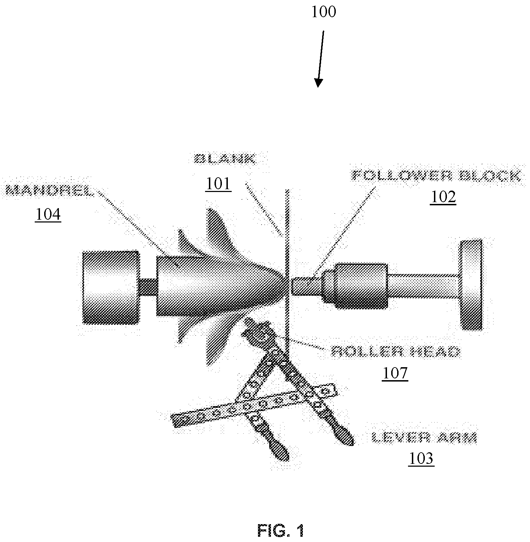

A prior art apparatus which implements said spin-forming process is shown schematically in Figure 1. Such apparatus, denoted by 100, comprises a contrast or tailstock (follower block) 102, a spindle (mandrel) 104 opposite to the contrast 102 and levers or poles (lever arms) 103, the latter equipped with a rotating head (roller head) 107. The spindle 104 has a shape corresponding to that to be obtained for the final product.

The first phase of the process consists in anchoring the raw material (blank), in the form of a disk of metal sheet 101, to the tailstock 102, and the spindle 104 to the respective lathe.

While the disk 101 rotates at high speed, it is pressed on the spindle 104 by means of the rotating heads 107 of the poles 103, which precisely approach successive circumferential portions of the disk 101 to the spindle 104. In this manner, the disc 101 is deformed up to trace the contour of spindle 104, acquiring the desired shape.

The metal spinning is a process that provides execution of more steps, during each of which is realized a gradual deformation of the metal disk 101 and a limited reduction of its thickness.

The prior art process just described is affected by an important productivity limit, tied to its high overall duration. The latter is affected by three main factors, namely:
- the execution of the preliminary operations of anchoring the disk to the tailstock and the spindle to the lathe;
- the need to operate the above-mentioned plurality of successive steps;
- the operations of extraction of the finished product from the machine.

Overall, the time of a metal spinning cycle, defined as the time interval that elapses between the production of two successive containers, is about the order of tens of seconds.

Moreover, the traditional metal spinning production cycle requires, in the preliminary and final stages of the process, the employment of an operator, who must manually perform the mounting operations of the disc and the spindle and then withdrawal of the finished product. Moreover, during the execution of these operations, the contacts of the operator's hands with metal cake pan are numerous and prolonged, this at the expense of the hygiene of the proceeding.

A further disadvantage of the known process is the use of lubricating and / or adjuvants which are not "food grade". This circumstance, coupled with the contact with the hands above mentioned, makes mandatory the washing of the cake pan to perform use. Obviously this is problematic and expensive however in the case of industrial applications of the product.

Furthermore, the metal cake pans obtained by spinning have high thickness, generally higher than those necessary for obtaining the desired properties of mechanical resistance.

In fact, the metal spinning process implies a significant reduction of the thickness of the machined plate with respect to the original one, reduction that can be also equal to 50%, in particular at the side walls of the container. Consequently, if for the purpose of obtaining certain characteristics of resistance is sufficient that the thickness of the container is equal to 250 µm, it is necessary in any case starting from a disk of thickness of at least 500 µm. This is to avoid an excessive thinning of the walls of the container, which would result in collapse of the resistance characteristics. This results in a waste of material, with a resulting negative impact on costs.

As a consequence of the drawback just mentioned, the prior art provides for the production of containers, even in the smaller sizes, from plates of high thickness, equal to about 500 µm, with increases up to more than 550 µm for the largest sizes. In fact, the known containers have a substantially constant thickness regardless of the diameter. Therefore, the stiffness of containers of different diameters is different, in particular increases with decreasing of size.

Finally, the products obtained by means of the metal spinning process are never identical.

In fact, in this type of processing, the pressure and the accuracy with which the operator handles the tool - in addition to the form and type of the latter - determine the properties of the circumferential streaks on the cake pan walls (indices of the subsequent phases of advancement of the deformation).

In addition to that, the external flange of the cake pan, i.e. the upper edge, is freely formed without any kind of support, and therefore its specific conformation varies depending on the accuracy and sensitivity of the operator.

So in conclusion, the aesthetic characteristics of the product, as well as some details of the geometry of the cake pan, are destined to vary from one manufacturer to another, from one operator to another, and even the containers produced in sequence by the same operator will never be identical to each other.

EP2554080 discloses a method of making a cooking container having a multilayer metallic structure according to the preamble of claim 1.

US3064112 A discloses a process of making a cooking vessel having a stainless steel interior and an aluminum exterior.

### Summary of the invention

The technical problem posed and solved by the present invention is therefore to provide a method and a relative apparatus for the realization of metal containers for oven, in particular trays or circular cake pans, of reusable type, which allow to overcome the drawbacks mentioned above with reference to known art.

This problem is solved by a method according to claim 1 and by an apparatus according to claim 7.

Preferred features of the present invention are object of the dependent claims.

The invention provides a method of cold molding of the aforesaid metal baking containers of reusable type. The containers produced with the method of the invention typically have a thickness of 250 µm or higher, in particular comprised in a range of 250-500 µm.

The use of cold-molding technology for the above mentioned containers allows to reduce the times of the production cycle up to 1-1.5 s per piece, with considerable increase in productivity. This is possible mainly thanks to some aspects of the method described below.

First, the process of deformation of the metallic raw material is not progressive, but takes place simultaneously over the entire width of the workpiece, preferably in a fraction of a second, thanks to the coupling of a forming mold with a counter.

Moreover, the production cycle is executable in continuous, starting from a reel of metallic material.

The different phases of the cycle, both singly and in sequence, are fully automatable and executable simultaneously.

In addition, in the cold-molding process does not take place any type of contact between the operator's hands and surfaces of the product. In fact, the only manual operation of the production cycle could be the closure of the finished product in cardboard boxes, which can take place when the containers have been already packaged with automated operations.

Furthermore, in the cold-molding process there is no addition of lubricant during the step of deformation of the material. The unique lubricants used are that for pre-lubrication of metal, present in small amounts (100-200 mg per m² of metal). These lubricants - eventually added as "processing aids" within the meaning of the *"*Regulations of the hygiene control of aluminium materials and objects and aluminium alloys intended to come into contact with foodstuffs" (Ministerial Decree of 18 April 2007, n . 76, published in the Official Gazette No. 141 of 20 June 2007 by the Ministry of Health) - have a formulation which respects national, European and international laws, and are suitable for direct contact with food. Therefore, in addition to the savings in terms of costs of lubricants, in principle there is no need to wash the cake pan before use.

Another important advantage consists in the fact that in the cold-molding process geometry of the product is entirely determinate by design of the work surfaces of the mold and the counter and is reproduced with precision on the cake pan. Therefore, the product obtained has a highly repeatable geometry. This repeatability is critical to the management of containers in automatic production lines.

In addition, taking advantage of cold molding, reusable containers are realized that have on average thickness lower than those obtained by metal spinning.

In fact, during the molding process, the thickness remains actually constant in all areas of the container, allowing to adapt it (the thickness) to the size of each format and to maintain high-strength properties while using a smaller amount of material. In this way, you save on raw material and none of functional performance of the cake pan is lost, and each different size format can have the same stiffness. For example, in this optimization logic, larger sizes will have thicknesses next to 500 µm, while for the little ones thicknesses will gradually reduce up to about 250 µm.

Taking account of the above and of various formats into production, you can calculate that a cake pan produced with embodiments of the method of the invention weights on average 15% less with respect to one, of equal size, produced through metal spinning, for example 89 g instead of 105 g.

The reduction of the thickness, and then the weights of the containers that can be achieved with the cold-molding process is equivalent to a decrease of the amount of metal used to obtain a cake pan of known art of equal size and performance.

It is important to decrease the amount of metal used, because it can be obtained, indirectly, a reduction of environmental impact caused by the production process of the metal used, in terms of energy expenditure and consumption of raw materials.

For example, for producing 1 kg of primary aluminium about 2.0 kg of CO₂ are emitted into the atmosphere, while for producing 1 kg of recycled aluminium 0.25 kg of CO₂ are emitted into the atmosphere. Assuming, at present, to use a mix comprising 50% of raw and 50% of recycled material, the average amount of CO₂ produced is equal to about 1,12 kg per kg of aluminium. In the light of what is illustrated above, the cold-molding process allows to reduce the consumption of aluminium of about 17 kg for every 1000 containers produced. This, in terms of environmental impact, means a reduction of emission of CO₂ in the atmosphere equal to 15 kg for every 1000 containers produced. Extending the reasoning for millions of pieces, this data assume a significant importance in view of a sustainable development.

As regards the apparatus of the invention, it is simpler, from the constructive and functional point of view, compared to that traditionally employed in similar processes.

Other advantages, features and the modes of employ of the present invention will become apparent from the following detailed description of some embodiments thereof, given by way of example and non-limitative purpose.

### Brief description of figures

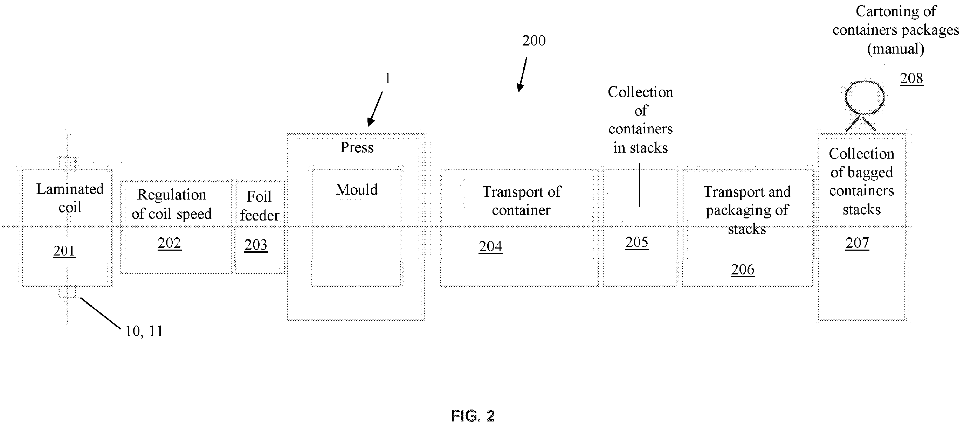

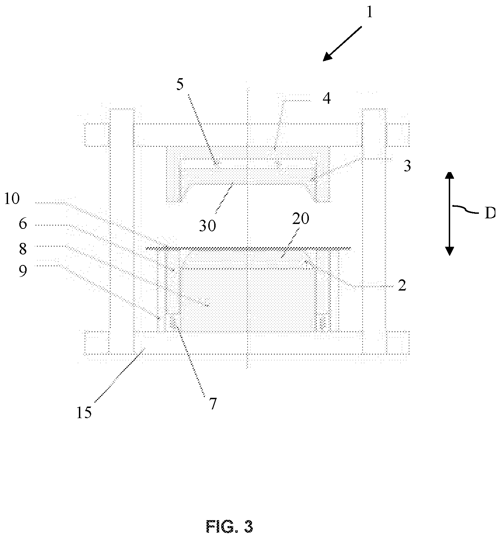

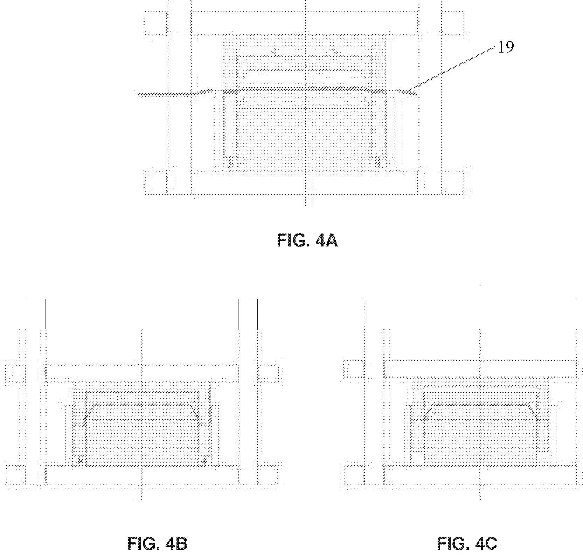

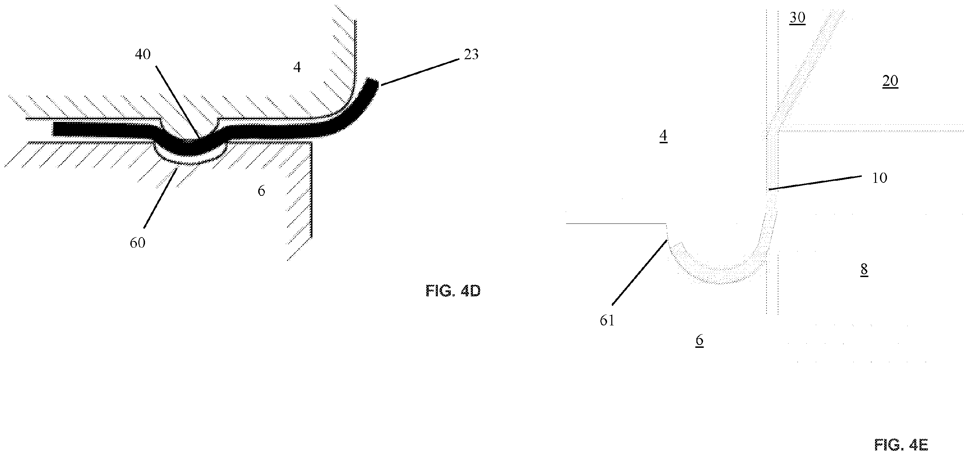

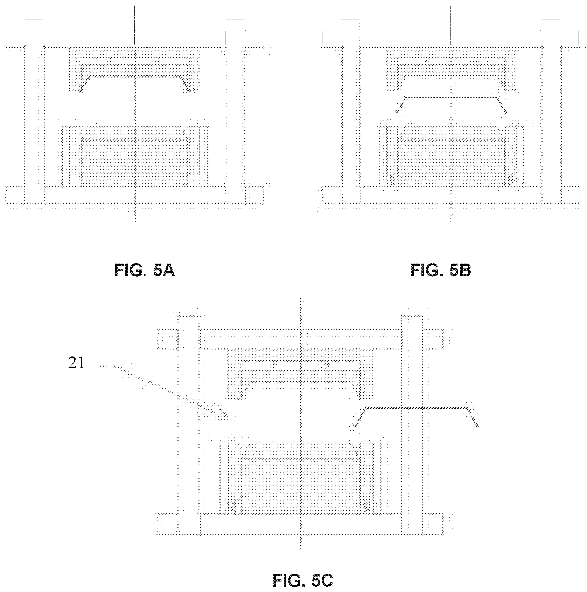

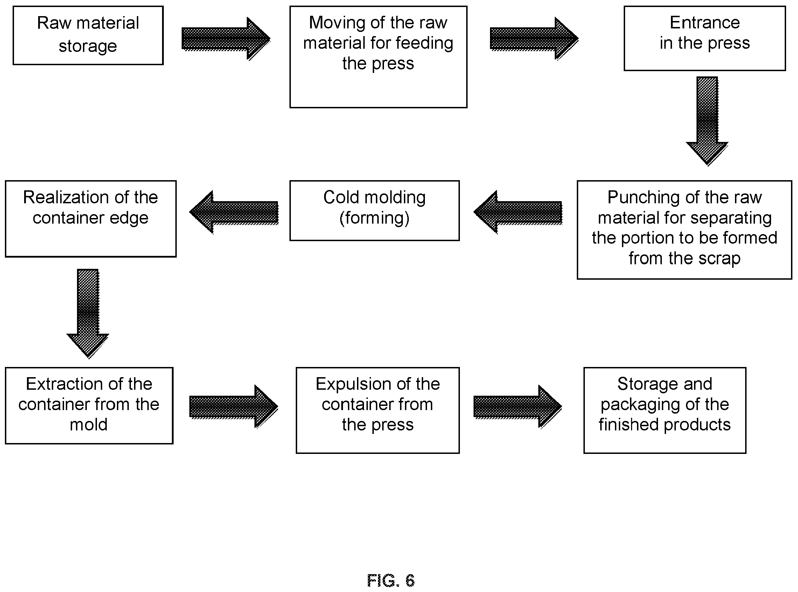

Reference will be made to figures of attached drawings, wherein:
▪ Figure 1, already introduced above, shows a metal spinning apparatus for the realization of reusable metal cake pans according to the known art;
▪ Figure 2 shows a block diagram of example of a production plant of circular metallic cake pans according to a preferred embodiment of the present invention;
▪ Figure 3 shows a schematic side view of a molding apparatus, in particular of press type, according to a preferred embodiment of the present invention;
▪ Figures 4A, 4B and 4C each shows a side view of the apparatus of Figure 3 in a respective stage of realization of a cake pan, in particular a blanking step of the material accessing to the press, a descent phase of a body of stamping punch and a phase of starting material deformation;
▪ Figure 4D shows an enlarged detail of a variant embodiment of the apparatus of Figure 3 in a phase of deformation of the base material;
▪ Figure 4E shows another enlarged detail of the apparatus of Figure 3 in a step of forming an edge;
▪ Figures 5A, 5BE 5C each shows a side view of the apparatus of Figure 3 in successive stages of production of the cake pan, in particular a phase of removal of the body of a molding punch by a concave counter-mold, a step of extraction of the finished cake pan from the molding body and a step of expulsion of the latter; and
▪ Figure 6 shows a flow diagram illustrative of a manufacturing process implemented by the apparatus of Figure 3 and according to one embodiment of the preferred embodiment.

The elements represented in the figures introduced above are to be understood as purely exemplary and are not necessarily shown in proportion.

### Detailed description of preferred embodiments

With reference initially to Figure 2, a production plant of a baking metal container of reusable type, in particular a baking pan or cake pan preferably circular, is generally denoted with 200. The plant 200 is based on a continuous production line which comprises, in sequence, components and units described below.

In a first unit 201, which we will say of housing of the metallic material, a laminate of aluminium (foil) 10 is provided in the form of a continuous strip wrapped in a coil 11. This unit 201 includes for example an unwinder reel on which the coil 11 is precisely wrapped.

The laminate 10 may be bare aluminium, internally and / or externally pre-treated with paints, films, sprays, or coating in general that confer it specific properties dependent on the the destination of application of the container ("coil coating" technology). Typical examples are an internal non-stick coating or a coating with "meat release effect": both guarantee that the food will not stick to the container surface during cooking. Another example of a coating is the coating of the outer surface of the container with high temperature resistant paints, even resistant to direct flame.

Such coatings may be neutral, transparent or coloured with special color effects or customized with logo obtained also with heat-resistant inks.

The plant 200 further comprises feeding means (foil feeder) 203 of the foil material towards the subsequent units. Such means 203 comprises, for example, a pair of rollers which engage one end of the foil 10 and drag it towards a molding apparatus 1. Preferably, the feeding means 203 is associated with regulation means 202 of the laminate 10 speed (i.e. regulation of feed of the raw material), for example one or more sensors and / or transducers. Similar means may also be provided to control the speed of unroll of reel and in general of the material in the coil 11. The regulation means can also work as foil accumulating station 10, so as to synchronize the continuous flow of the feeding means 203 with the discrete processing of apparatus 1.

The feeding means 203 are configured in such a way as to provide a continuous feeding of material to apparatus 1.

The apparatus 1, or press, preferably automatic and of continuous working cycle, realizes a cold molding and will be described in greater detail shortly.

The feeding means 203 precisely guarantee the advancement of the material upstream of the press 1, for the subsequent molding. The approach of the material to apparatus 1 for the formation of a subsequent container takes place parallel to the extraction and ejection of the previously formed container.

The containers successively produced are transported by transport means 204 and ranked in stacks, placing them one above the other, into a collection or stacking unit 205.

Downstream of the unit 205, means 206 of packaging and transportation of the stacks of containers are provided. Each container of the stack is packaged according to pre-selected packaging specifications, for example bagged. The so packaged containers are then conveyed to a storage or collection unit 207.

Depending on the requests for distribution, the containers may then be conveyed to a collection belt which transports them to a boxing station 208, where they can be manually enclosed in cardboard boxes.

The molding apparatus 1 will now be described in greater detail with initial reference to Figure 3.

The apparatus 1 comprises a first and a second molding body, respectively 2 and 3. In particular, the first molding body 2 (forming punch) is a convex body, or male, substantially shaped like a punch or piston. The second body 3 (forming die) is a concave body, or female, which we can also call counter. The punch 2 and the die 3 have respective molding or forming surfaces, respectively 20 and 30, respectively convex and concave, which reproduce the desired shape of the final container.

The punch 2 is associated to a support body 8 (punch holder) fixed or integral with it.

In the embodiment here considered, the counter-mold 3 is movable, in particular slidable, with respect to the punch 2 so as to be able to attest on the latter with interposition of the raw material to be printed.

For this purpose, dedicated means for moving the counter 3 with respect to the punch 2 are provided, not represented for simplicity. In the present example, the direction of movement D, i.e. of approaching / distancing of the bodies 2 and 3, is a vertical direction. Also in the present example, the counter 3 is arranged above the punch 2, and then the approach motion of the two bodies is a downward translation of the counter 3. The punch 2 and the relative support body 8 are integral with a base of apparatus 1, in particular with a fixed lower die holder associated to columns integral with it, namely to a frame 15 of the apparatus.

The counter 3 is associated with a die punch 4 (blank punch), circumscribed to the same counter and movable integrally with the latter. Additionally, between die punch 4 and counter 3, elastic elements 5 of contrast are interposed, usually pneumatic cylinders or, in some cases, springs.

Correspondingly, the punch 2 is associated, in particular circumscribed, with a contrast body 6 (pressure plate), or pressure element, suitable to be coupled in abutment with the die punch 4. Between contrast body 6 and frame 15, contrast elastic elements 7 are arranged, usually pneumatic cylinders or, in some cases, springs. Therefore, the contrast body 6 can translate, along the same direction D of approaching / spacing of the bodies 2 and 3, when pushed by the die punch 4.

As shown in the detail of Figure 4D, the die punch 4 has a break-wrinkles means 40 in the form of protrusion, i.e. of coast, protuberance or projection, in particular with rounded profile or rectangular profile and chamfered edges. In the present example, the means 40 is integral with the die punch 4 and engages, when the punch 2 and counter-mold 3 are in abutment one on one another, a corresponding seat 60 of the contrast body 6. The means 40 avoids wrinkling in the walls of the container during the phase of the plastic sliding of material (denoted by 23 in Figure 4D) caused by the pressure between the two bodies 2 and 3.

The means 40 determines the level of wrinkling, i.e. the number and depth of folds or radial grooves of the walls of the container. At constant geometry, the more effective is the job of the break-wrinkles means, the smaller is the number and size of wrinkles, and the wall of the container tends to have a substantially smooth surface.

With reference again to Figure 3, the apparatus 1 also comprises a blanking body 9 (blank die), in particular limited to the contrast body 6 and preferably fixed with the frame 15. The blanking body 9 assists the function of the die punch 4.

In the present embodiment, the punch 2, the counter 3, the die punch 4, the contrast body 6 and the blanking body 9 each presents a circular configuration in plan.

In the configuration shown in Figure 3, the punch 2 and the counter 3 are located in an input configuration of a portion of foil 10 to be subjected to molding and have the maximum mutual distance. The height reached by the counter-die 3 in this configuration is defined as upper dead point of the press 1.

We will now describe the operational mode of the apparatus 1, starting from the above mentioned configuration of introduction of a new portion of metal foil between the molding bodies 2 and 3.

The end of the foil 10 dragged into the press 1 partially rests against a portion of the molding surface 20 of the punch 2, and also is in contact with the contrast body 6 and with the blanking body 9.

The die punch 4 associated with the counter 3, actuated by the above mentioned dedicated movement means, in particular a bat of the press to which is constrained, moves from the upper dead point position and begins a vertical translational motion downwards.

During the motion of descent along the movement direction D, the die punch 4 is coupled in abutment with the engagement body 6. Between the two elements there is the interposition of the foil 10. The die punch 4 pushes the contrast body 6 on the frame 15, by exerting a compression force on the elastic contrast elements 7. Continuing in its downward movement, the die punch 4 comes to be in a relative configuration of interference with respect to the blanking element 9.

As shown in Figure 4A, the sliding of the die punch 4 with respect to the blanking body 9 determines the blanking of the foil 10 at the contact surface between the two bodies.

In other words, the portion of material to be formed is separated by shearing of the portion of excess material 19, called swarf or processing waste (material scrap), intended precisely to be discarded. This sheared portion of foil 10, intended for molding, has a circular profile in plan by virtue of the shape of the die punch 4 and of the blanking body 9.

With reference to Figures 4B and 4C, the die punch 4 continues in its motion downward, while the peripheral area of the material to be formed is gripped between the die punch 4 and the contrast body 6.

Meanwhile, the counter-die 3, integral with the die punch 4 in its downward movement, closes on the punch 2. While the die punch 4 continues to descend, compresses the contrast elastic elements 5 of connection with the counter die 3, which stood on the punch 2. The disc of material interposed between the two respective molding surfaces 20 and 30 is pressed in such a way as to make it assume the shape of these surfaces, which is that desired for the final container.

At the same time, the peripheral material clamped between the die punch 4 and the contrast body 6 plastically flows towards the central part of the disc, forced to occupy a larger area than that of departure, to 'feed' the forming between the two molding surfaces 20 and 30.

In this phase of the process the presence of the break-wrinkles means 40, integral to the die punch 4, prevents the formation of wrinkles on the container walls.

During this molding step, the contrast body 6 serves as abutment body to the die punch 4.

The descent of the die punch 4 continues up to stopping in correspondence of the so-called lower dead point of the press 1, i.e. the position of maximum closing of the molding apparatus (Figure 4B). Arrived in this position, the direction of motion of the die punch 4 and of the counter 3 is reversed, and the mold opens.

At this point, the shape of the container is completed, except for the outer edge.

The realization of this edge is performed concurrently with a return motion of contrast body 6 in a rest position.

Said body 6 is free to return in the rest position at the end of the molding step, when the die punch 4 reverses the direction of motion and starts to translate upwards, progressively downloading the elastic elements 7 of contrast.

During this ascent phase, the contrast body 6 moves progressively upward, pushed by the force of elastic return of the underlying contrast elements 7. During the execution of this movement, the contrast body 6 lifts the peripheral part of the container, which was gripped between the die punch 4 and the same contrast body 6, forming the outer edge of the cake pan (Figure 4C). In particular, as shown in Figure 4E, on the inner end of the contrast body 6, a groove, seat or furrow 61 may be provided, which invites the material to wind during the ascent phase of the body itself.

As shown in Figure 5A, the cake pan initially remains adherent to the surface 30 of the counter 3, following the die punch 4 in its ascent motion. After a few moments, due to its own weight, the container is detached from the mold (Figure 5B).

After the extraction step, it remains instantaneously suspended, in a free fall, between the counter die 3 and the punch 2.

Preferably, the molding apparatus 1 further comprises means for producing a jet of compressed air 21. Said jet is arranged to invest the container while it is still free falling in the air, in order to realize its expulsion in a direction opposite to that of feeding of the raw material to the press 1 (Figure 5C).

The molding apparatus 1 is extremely simple, even in comparison with similar apparatus employed in different applications.

In particular, it will be appreciated that the cake pan detaches from the mold by effect of its own weight. Therefore, strictly speaking, in many applications of the invention it is not necessary to provide any movable plate (or equivalent means) at the counter die 3 which favors said detachment.

Also the formation of the edge by the same contrast body 6 avoids the necessity of providing dedicated means.

With reference to Figure 6, a manufacturing method for the realization of metallic cake pans with a thickness over 250 µm by means of cold stamping according to a preferred embodiment of the present invention comprises several steps, to be executed in succession. These phases have already been considered above with reference to the structure and operating modes of the apparatus 1 and the plant 200.

The first operation of the production cycle consists in the storage of a determined quantity of raw material, destined to the continuous feeding of an automatic machine 1 in a continuous cycle, in particular inserted in the plan 200 already described above. The raw material is then moved and transported, animated by a given rate of feed, to the apparatus 1. Once positioned on it, the material is subjected to a series of rapid operations, that preferred embodiments of the invention allow to perform in fractions of a second.

In a first phase, a punching is executed, which separates the waste material from the portion of raw material intended for molding. The immediately next operation is a cold-molding, during which the raw material is instantly compressed between two molding bodies, to make the material assume a determined shape. Finally, the outer edge of the cake pan so formed is realized. The cake pan remains adherent to the mold for a moment, but then it is extracted by virtue of its own weight and it is ejected from the machine. Finished products produced in this way are stored and packaged.

As already mentioned, features and preferred modes of the method of the invention have already been described above with reference to the plant 200 and apparatus 1.

The present invention has hereto been described with reference to preferred embodiments. It is to be understood that there may be other embodiments afferent to the same inventive core, as defined by the scope of protection of the claims set out below.

## Claims

1. A method of making a re-usable metallic container for oven, the metallic container being a baking pan or cake pan preferably of circular shape,
which method comprises a cold molding step of a metallic foil (10) performed by pressing the foil between a concave molding body (3), or female body, and a corresponding convex molding body (2), or male body,
wherein said container has a thickness equal to or greater than about 250 µm, preferably comprised in a range of about 250-500 µm,
**characterised in that**
said method comprises a punching step of said foil (10) performed in such a way to isolate a useful portion of the foil to be subjected to said molding step, wherein said punching step is performed by means of a punching body (4) movable integrally with said concave molding body (3),
and **in that** said method comprises a forming step of a wound peripheral edge of said container,
wherein said forming step is performed by means of a forming element (6) arranged alongside said convex molding body (2), which forming element (6) is an elastic contrast body for said punching body (4) and said forming step is performed during a stroke of said elastic contrast body (6) towards its rest position.

2. The method according to claim 1, which provides a line of continuous feeding of said metallic foil (10), preferably unwound from a coil (11), between said molding bodies (2, 3).

3. The method according to claim 1 or 2, wherein said cold molding step is performed by moving said concave body (3) towards said convex body (2), preferably according to a translation motion, such translation motion being in particular performed in a vertical direction.

4. The method according to any one of the preceding claims, wherein said punching step immediately precedes said cold molding step.

5. The method according to any one of the preceding claims, wherein said forming step of a peripheral edge of said container is performed downstream of said cold molding step.

6. The method according to any one of the preceding claims, wherein said metallic foil (10) is or includes aluminium.

7. An apparatus (1) for making a reusable metallic container for oven, the metallic container being a baking pan or cake pan preferably of a circular shape, which apparatus comprises:
▪ a concave molding body (3), or female body, and a corresponding convex molding body (2), or male body, selectively approachable one to another in order to press a metallic foil (10) therebetween in such a way to make a cold molding of the material;
▪ relative moving means of said molding bodies;
▪ a punching body (4) of the metallic foil (10) which is movable integrally with said concave molding body (3);
▪ forming means (6) of a wound peripheral container edge, which forming means comprise a forming element (6) arranged alongside said convex molding body (2), which forming element (6) is an elastic contrast body for said punching body (4) and it is configured to perform a forming step during a stroke of said contrast body (6) towards its rest position,
wherein the apparatus is configured to produce finished containers having a thickness equal to or greater than about 250 µm,preferably comprised in a range of about 250-500 µm.

8. The apparatus (1) according to claim 7, wherein said moving means are configured to move said concave body (3) towards said convex body (2), preferably according to a translation motion, such translation motion being in particular performed in a vertical direction.

9. A plant (200) for making a reusable metallic container for oven, in particular a baking pan or cake pan preferably of a circular shape, which plant comprises an apparatus (1) according to any one of claims 7 or 8, inserted in a continuous feed line of the metallic foil (10), such metallic foil being preferably unwound from a coil (11), between said molding bodies (2, 3).

10. The plant (200) according to the preceding claim, comprising regulation means (202) of metallic foil feeding speed, configured to synchronize a continuous flow of feeding means (203) with a discrete working in said molding apparatus (1).

## Patentansprüche

1. Verfahren zur Herstellung eines wiederverwendbaren Metallbehälters für einen Ofen, wobei der Metallbehälter eine Backform oder Kuchenform, vorzugsweise von kreisförmiger Form, ist,
wobei das Verfahren einen Kaltformungsschritt einer Metallfolie (10) umfasst, der durch Pressen der Folie zwischen einem konkaven Formkörper (3), oder weiblichen Körper, und einem entsprechenden konvexen Formkörper (2), oder männlichen Körper, durchgeführt wird,
wobei der Behälter eine Dicke hat, die gleich oder größer als etwa 250 µm ist, vorzugsweise in einem Bereich von etwa 250-500 µm liegend,
**dadurch gekennzeichnet, dass**
das Verfahren einen Stanzschritt der Folie (10) umfasst, der so durchgeführt wird, dass ein nützlicher Abschnitt der Folie vereinzelt wird, der dem Formungsschritt unterzogen werden soll, wobei der Stanzschritt mittels eines Stanzkörpers (4) durchgeführt wird, der einstückig mit dem konkaven Formkörper (3) beweglich ist,
und dass das Verfahren einen Formungsschritt eines gewundenen Umfangsrandes des Behälters umfasst,
wobei der Formungsschritt mittels eines längsseits des konvexen Formkörpers (2) angeordneten Formungselements (6) durchgeführt wird, wobei das Formungselement (6) ein elastischer Kontrastkörper für den Stanzkörper (4) ist und der Formungsschritt während eines Hubs des elastischen Kontrastkörpers (6) in Richtung seiner Ruheposition durchgeführt wird.

2. Verfahren gemäß Anspruch 1, bei dem die Metallfolie (10), die vorzugsweise von einer Spule (11) abgewickelt wird, kontinuierlich zwischen die Formkörper (2, 3) zugeführt wird.

3. Verfahren nach Anspruch 1 oder 2, wobei der Kaltformungsschritt durch Bewegen des konkaven Körpers (3) in Richtung des konvexen Körpers (2) durchgeführt wird, vorzugsweise gemäß einer Translationsbewegung, wobei diese Translationsbewegung insbesondere in einer vertikalen Richtung durchgeführt wird.

4. Verfahren gemäß einem der vorhergehenden Ansprüche, wobei der Stanzschritt unmittelbar vor dem Kaltformungsschritt erfolgt.

5. Verfahren gemäß einem der vorhergehenden Ansprüche, wobei der Formungsschritt eines Umfangsrandes des Behälters stromabwärts des Kaltformungsschrittes durchgeführt wird.

6. Verfahren gemäß einem der vorhergehenden Ansprüche, wobei die Metallfolie (10) aus Aluminium besteht oder beinhaltet.

7. Vorrichtung (1) zur Herstellung eines wiederverwendbaren metallischen Behälters für einen Ofen, wobei der metallische Behälter eine Back- oder Kuchenform ist, die vorzugsweise eine runde Form aufweist, wobei die Vorrichtung umfasst:
■ einen konkaven Formkörper (3), oder weiblichen Körper, und einen entsprechenden konvexen Formkörper (2), oder männlichen Körper, die selektiv aneinander angenähert werden können, um eine metallische Folie (10) dazwischen zu pressen, so dass eine Kaltformung des Materials erfolgt;
■ Mittel zum Bewegen der genannten Formkörper relativ zueinander;
■ einen Stanzkörper (4) für die Metallfolie (10), der einstückig mit dem konkaven Formkörper (3) bewegbar ist;
■ Formungsmittel (6) eines gewickelten peripheren Behälterrandes, wobei die Formungsmittel ein Formungselement (6) umfassen, das entlang des konvexen Formkörpers (2) angeordnet ist, wobei das Formungselement (6) ein elastischer Kontrastkörper für den Stanzkörper (4) ist und dazu eingerichtet ist, einen Formungsschritt während eines Hubs des Kontrastkörpers (6) in Richtung seiner Ruheposition durchzuführen,
wobei die Vorrichtung dazu eingerichtet ist, fertige Behälter mit einer Dicke gleich oder größer als etwa 250 µm,vorzugsweise in einem Bereich von etwa 250-500 µm, herzustellen.

8. Vorrichtung (1) nach Anspruch 7, wobei die Mittel zum Bewegen dazu eingerichtet sind, den konkaven Körper (3) in Richtung des konvexen Körpers (2) zu bewegen, vorzugsweise gemäß einer Translationsbewegung, wobei diese Translationsbewegung insbesondere in einer vertikalen Richtung ausgeführt wird.

9. Anlage (200) zum Herstellen eines wiederverwendbaren Metallbehälters für einen Ofen, insbesondere einer Backform oder einer Kuchenform mit vorzugsweise kreisförmiger Form, wobei die Anlage eine Vorrichtung (1) gemäß einem der Ansprüche 7 oder 8 umfasst, die in eine kontinuierliche Zuführungslinie der Metallfolie (10) eingesetzt ist, so dass die Metallfolie vorzugsweise von einer Spule (11) abgewickelt wird, zwischen die Formkörper (2, 3).

10. Die Anlage (200) gemäß dem vorhergehenden Anspruch umfassend Mittel (202) zum Regulieren der Metallfolienvorschubgeschwindigkeit, die dazu eingerichtet sind, einen kontinuierlichen Fluss von Vorschubmitteln (203) mit einer diskreten Bearbeitung in der Formvorrichtung (1) zu synchronisieren.

## Revendications

1. Procédé pour réaliser un récipient métallique réutilisable pour four, le récipient métallique étant un moule ou un moule à gâteau de préférence de forme circulaire,
lequel procédé comprend une étape de moulage à froid d'une feuille métallique (10) réalisée en pressant la feuille entre un corps de moulage concave (3) ou corps femelle, et un corps de moulage convexe (2) correspondant ou corps mâle,
dans lequel ledit récipient a une épaisseur égale ou supérieure à 250 µm, de préférence comprise dans une plage d'environ 250-500 µm,
**caractérisé en ce que** :
ledit procédé comprend une étape de poinçonnement de ladite feuille (10) réalisée afin d'isoler une partie utile de la feuille à soumettre à ladite étape de moulage, dans lequel ladite étape de poinçonnement est réalisée au moyen d'un corps de poinçonnement (4) mobile de manière solidaire avec ledit corps de moulage concave (3),
et **en ce que** ledit procédé comprend une étape de formage d'un bord périphérique enroulé dudit récipient,
dans lequel ladite étape de formage est réalisée au moyen d'un élément de formage (6) agencé le long dudit corps de moulage convexe (2), lequel élément de formage (6) est un corps de contraste élastique pour ledit corps de poinçonnement (4) et ladite étape de formage est réalisée pendant une course dudit corps de contraste élastique (6) vers sa position de repos.

2. Procédé selon la revendication 1, qui fournit une ligne d'alimentation continue de ladite feuille métallique (10), de préférence déroulée d'une bobine (11), entre lesdits corps de moulage (2, 3).

3. Procédé selon la revendication 1 ou 2, dans lequel ladite étape de moulage à froid est réalisé en déplaçant ledit corps concave (3) vers ledit corps convexe (2), de préférence selon un mouvement de translation, un tel mouvement de translation étant en particulier réalisé dans une direction verticale.

4. Procédé selon l'une quelconque des revendications précédentes, dans lequel ladite étape de poinçonnement précède immédiatement ladite étape de moulage à froid.

5. Procédé selon l'une quelconque des revendications précédentes, dans lequel ladite étape de formage d'un bord périphérique dudit récipient est réalisée en aval de ladite étape de moulage à froid.

6. Procédé selon l'une quelconque des revendications précédentes, dans lequel ladite feuille métallique (10) est de l'aluminium ou en comprend.

7. Appareil (1) pour réaliser un récipient métallique réutilisable pour four, le récipient métallique étant un moule ou un moule à gâteau de préférence de forme circulaire, lequel appareil comprend :
▪ un corps de moulage concave (3) ou corps femelle, et un corps de moulage convexe (2) correspondant ou corps mâle, pouvant sélectivement se rapprocher l'un de l'autre afin de presser une feuille métallique (10) entre eux de manière à réaliser un moulage à froid du matériau ;
▪ des moyens de déplacement relatifs desdits corps de moulage ;
▪ un corps de poinçonnement (4) de la feuille métallique (10) qui est mobile de manière solidaire avec ledit corps de moulage concave (3) ;
▪ des moyens de formage (6) d'un bord de récipient périphérique enroulé, lesquels moyens de formage comprennent un élément de formage (6) agencé le long dudit corps de moulage convexe (2), lequel élément de formage (6) est un corps de contraste élastique pour ledit corps de poinçonnement (4) et est configuré pour réaliser une étape de formage pendant une course dudit corps de contraste (6) vers sa position de repos,
dans lequel l'appareil est configuré pour produire des récipients finis ayant une épaisseur égale ou supérieure à environ 250 µm, de préférence comprise dans une plage d'environ 250-500 µm.

8. Appareil (1) selon la revendication 7, dans lequel lesdits moyens de déplacement sont configurés pour déplacer ledit corps concave (3) vers ledit corps convexe (2), de préférence selon un mouvement de translation, ledit mouvement de translation étant en particulier réalisé dans une direction verticale.

9. Installation (200) pour réaliser un récipient métallique réutilisable pour four, en particulier un moule ou un moule à gâteau de préférence de forme circulaire, laquelle installation comprend un appareil (1) selon l'une quelconque des revendications 7 ou 8, inséré dans une ligne d'alimentation continue de la feuille métallique (10), cette feuille métallique étant de préférence déroulée d'une bobine (11), entre lesdits corps de moulage (2, 3).

10. Installation (200) selon la revendication précédente, comprenant des moyens de régulation (202) de vitesse d'alimentation de feuille métallique, configurés pour synchroniser un flux continu des moyens d'alimentation (203) avec un travail discret dans ledit appareil de moulage (1).
